# EUROPEAN PATENT APPLICATION

(11) **EP 1 847 421 A2**
(43) Date of publication of application: **24.10.2007**
(21) Application number: 07105462.1
(22) Date of filing: 02.04.2007
(51) Int. Cl.: B60R 21/20

(54) **Airbag system, vehicle and method of manufacturing airbag system**

(30) Priority: 18.04.2006 JP 2006114486
(71) Applicant: TAKATA CORPORATION, Minato-ku, Tokyo 106-8510 (JP)
(72) Inventor: Miwa, Kazuya c/o Takata Corporation, Tokyo 106-8510 (JP); Nakazawa, Wataru c/o Takata Corporation, Tokyo 106-8510 (JP)
(74) Representative: Vossius & Partner

(57) **Abstract**

A technology is provided which is effective for compacting an airbag folded in a predetermined mode and for maintaining a compact state of the airbag for a long period of time in a vehicular airbag system to be mounted in a vehicle. An airbag system 100 of the invention has an airbag holder 160 for retaining the airbag by using a first covering member (film sheet member) for sealing an airbag 110 in a state formed into a predetermined storage shape obtained by compressing and compacting the airbag 110 folded in a predetermined mode and a second covering member 180 (wrapping member) for wrapping the airbag 110 and first covering member 170.

## Description

The present invention relates to a technology for constructing a vehicular airbag system to be mounted in a vehicle.

Hitherto, there has been known a structure of an airbag system that unfolds and inflates an airbag in an occupant constraining area when a vehicular accident occurs. With regard to an airbag system of this sort, the following patent document 1 has disclosed a technology of retaining a folded shape of the airbag that has been folded in advance by covering an airbag with an airbag holder made of cloth.
It is highly required to downsize the whole airbag system in particular in designing such an airbag system, and in order to accommodate to such requirement, it is effective to downsize the airbag itself whose capacity is relatively large among components of the airbag system. Then, although it is conceivable to compact the airbag itself in the folded state, there have been problems that there is a certain limit in compressing and compacting the airbag in the folded state by using the airbag holder made of cloth as described in JP-A-1999-28997 (patent document 1) for example and that it is difficult to maintain the compact state of the airbag which has been compacted once for a long period of time.

Accordingly, an object of the present invention is to provide a technology effective for compacting an airbag folded into a certain shape and for maintaining the compact state of the airbag for a long period of time in a vehicular airbag system to be mounted in a vehicle.

The invention is made to solve the abovementioned problems. It is noted that the invention is applicable to technologies for constructing an airbag system mounted not only in passenger cars but also in various vehicles such as trucks, buses, trains, ships, motorcycles and the like.

A first aspect of the present invention for solving the problems described above is an airbag system as described in Claim 1. The airbag system described in Claim 1 has, at least, an airbag, an airbag holder, an airbag storage section, an airbag cover, a gas supplying section and a thin section and is mounted so as to be arranged for an occupant who rides in various vehicles.

The airbag of the invention is made as an airbag formed into a predetermined storage shape so as to unfold and inflate when a vehicular accident occurs. The airbag unfolds and inflates in a predetermined unfolding and inflating area to constrain an occupant inside of or a pedestrian outside of the vehicle when an accident occurs. An object of constraint to be constrained by the airbag includes an occupant who sits on a driver's seat, an occupant who sits on a front passenger's seat, an occupant who sits on a seat such as a rear seat other than the driver's and front passenger's seats and a pedestrian who is walking the outside of the car. Accordingly, the unfolding and inflating area where the airbag of the invention unfolds and inflates includes widely not only an area in the car where an occupant who is an object of constraint is located but also an area out of the car where a pedestrian who is also an object of constraint exists.

The airbag storage section of the invention is arranged so as to store the airbag whose shape is retained by the airbag holder and to have an airbag opening that allows the airbag to unfold and inflate. The airbag stored in the airbag storage section projects out of the airbag storage section through the airbag opening when it unfolds and inflates. The airbag opening is covered by the airbag cover of the invention.

The gas supplying section of the invention has a function of supplying airbag-inflating gas to the airbag to unfold and inflate the airbag in the unfolding and inflating area when a vehicular accident occurs. Specifically, the gas supplying section is arranged so as to generate the airbag-inflating gas by detecting the occurrence of a vehicular accident and to guide the airbag-inflating gas to the inside of the airbag.

The airbag holder of the invention has a function of holding the airbag in the predetermined storage shape. Specifically, according to the invention, the airbag holder has at least a film sheet member and a wrapping member.

The film sheet member that is one component of the airbag holder is arranged as a film sheet-like member (thin sheet-like film) that seals the airbag in the state of the predetermined storage shape obtained by compressing, from the outside, and compacting the airbag folded in a predetermined mode. Thereby, the airbag in the folded state is sealed and packed in the state of the storage shape obtained by compressing and compacting it by the film sheet member. It should be noted that 'compression' here is achieved by compacting the airbag by vacuuming or reducing pressure of the inside of the film sheet member while storing the folded airbag in the bladder-like film sheet member or by pressurizing the film sheet member itself that contains the folded airbag from the outside. As for the process of compressing and compacting the folded airbag, the airbag in the folded state may be compressed after folding the airbag or the airbag may be folded while compressing it in the present invention. Preferably, the film sheet member has both functions of compressing and compacting the airbag and of sealing the compacted airbag in the invention. Furthermore, as for a method for folding the airbag, there may be cited a rolled folding mode of retracting the airbag in a shape of roll, a bellow folding mode of folding the airbag in a shape of bellow, a folding mode (mechanical folding) of pushing the expanded airbag regularly or irregularly against a wall and a folding mode of combining these modes as the predetermined mode' mentioned here.

The wrapping member that is one component of the airbag holder is arranged as a member for wrapping the airbag and film sheet member, i.e., as a member for wrapping the film sheet member that seals and packs the airbag further over the film sheet member. Thus, the airbag has a cover structure in which the airbag in the folded state is covered doubly by the film sheet member and then by the wrapping member. Thereby, even if the seal of the airbag by the film sheet member is removed, the wrapping member gives force for retaining the shape of the airbag and suppresses an increase in the capacity of the airbag by the compression reaction force of the airbag.

According to such a structure of the airbag system described in Claim 1, the use of the film sheet member that seals the airbag in the compressed state allows the airbag folded in the predetermined mode to be compacted. Specifically, the use of the sheet film member allows a high compression force to be given to the airbag in the folded state and a degree of compaction to be increased. Furthermore, because the airbag itself that has a relatively large capacity among the components of the airbag system is compacted by the film sheet member, the airbag system may be downsized simply. Furthermore, the use of the wrapping member that wraps the film sheet member allows the capacity of the airbag in the compact state to be suppressed from increasing even when the seal of the airbag by the film sheet member is removed and increases reliability of maintenance of the compact state of the airbag for a long period of time as compared with a case of sealing the airbag only with the film sheet member. Accordingly, it becomes possible to stabilize the quality for retaining the folded shape of the airbag for a long period of time.

A second aspect of the present invention for solving the aforementioned problems is the airbag system as described in Claim 2. In the airbag system as described in Claim 1, the wrapping member described in Claim 1 is arranged so as to wrap the airbag and film sheet member by a means of a shape retaining force that is smaller than a compacting load required for compressing and compacting the airbag folded in the predetermined mode to be formed into the predetermined storage shape and larger than a compression reaction force caused by restoration of the airbag and generated when the seal of the airbag by the film sheet member is removed. A material such as cloth and resin such as a film sheet may be appropriately used as the material of the wrapping member.

The inventors have repeatedly measured the load in compressing and compacting the airbag in the folded state to be formed into the predetermined storage shape. As a result, it was confirmed that the compression force (compacting load) necessary for compressing the airbag in the folded state to the predetermined storage shape (compact state) is considerably larger than the compression reaction force (restoring force) caused when the airbag whose compression has been completed once tries to return to the state before the compression. Then, the shape retaining force of the wrapping member is specified as being smaller than the compacting load and larger than the compression reaction force in the present invention.

According to such an arrangement of the airbag system as described in Claim 2, it is possible to block the capacity of the airbag from increasing due to the compression reaction force of the airbag by the wrapping member even if the seal of the airbag by the film sheet member is removed. This prevents such a phenomenon that the airbag cover floats up by the load received from the airbag.

A third aspect of the present invention for solving the aforementioned problems is the airbag system as described in Claim 3. According to the airbag system as described in Claim 3, the wrapping member described in Claim 1 or 2 is made of the same material as the fabric forming the airbag.
According to such an arrangement of the airbag system as described in Claim 3, it becomes possible to cut the manufacturing costs by commonly using the material for the different components of the airbag system.

A fourth aspect of the present invention for solving the aforementioned problems is a vehicle as described in Claim 4. The vehicle as described in Claim 4 has, at least, an engine driving system, an electrical system, a drive control unit and an airbag system. The engine driving system of the invention is arranged as a system related to an engine and the vehicle. The electrical system of the invention is arranged as a system related to electrical parts used in the vehicle. The drive control unit of the invention is arranged so as to control operations of the engine driving system and the electrical system.
The airbag system of the invention is mounted so as to be arranged for a vehicle occupant and unfolds and inflates the airbag in the unfolding and inflating area to constrain the vehicle occupant when a vehicular accident occurs and is constructed as the airbag system described in any one of Claims 1 through 3.
Accordingly, the invention as described in Claim 4 provides the vehicle carrying the airbag system that is effective in compacting the airbag folded in the predetermined mode and in maintaining the compact state of the airbag for a long period of time.

A fifth aspect of the present invention for solving the problems is a method of manufacturing the airbag system as described in Claim 5. This manufacturing method is a method for manufacturing the airbag system that unfolds and inflates the airbag in an unfolding and inflating area to constrain the vehicle occupant when a vehicular accident occurs and has at least first and second steps.
The first step of the invention is a step of sealing the airbag folded in the predetermined mode by the film sheet member while compressing and compacting the airbag from the outside to form into the predetermined storage shape and, thereby, of retaining the airbag in the predetermined storage shape. Thereby, the airbag formed into the predetermined storage shape and sealed by the film sheet member may be obtained.
The second step of the present invention is a step of wrapping the airbag and film sheet member obtained in the first step by the wrapping member. Thereby, the airbag package having the cover structure in which the airbag in the folded state is doubly covered by the wrapping member over the film sheet member is obtained.
The use of the manufacturing method as described in Claim 5 allows the airbag folded in the predetermined mode to be compacted and the compact state of the airbag to be maintained for a long period of time.

A sixth aspect of the present invention for solving the aforementioned problems is a method of manufacturing the airbag system as described in Claim 6. In this manufacturing method, the wrapping member wraps the airbag and film sheet member in the second step described in Claim 5 by the means of shape retaining force that is smaller than the compacting load required for compressing and compacting the airbag folded in the predetermined mode to form into the predetermined storage shape and larger than the compression reaction force caused by restoration of the airbag and generated when the seal of the airbag by the film sheet member is removed.
The use of the manufacturing method as described in Claim 6 allows the capacity of the airbag to be blocked from increasing due to the compression reaction force of the airbag when its seal is removed by the wrapping member.

A seventh aspect of the present invention for solving the aforementioned problems is a method of manufacturing the airbag system as described in Claim 7. In this manufacturing method, the same material as the fabric forming the airbag is used for the wrapping member described in Claim 5 or 6.
According to the manufacturing method as described in Claim 7, the manufacturing costs may be cut by commonly using the same material for the different components of the airbag system.

As described above, according to the present invention, it has become possible to compact the airbag folded in the predetermined mode and to maintain the compact state of the airbag for a long period of time in the vehicular airbag system to be mounted in the vehicle by constructing the airbag holder specifically by using the film sheet member that seals the airbag in the predetermined storage shape obtained by compressing and compacting the airbag folded in the predetermined mode and the wrapping member that wraps the airbag and film sheet member.

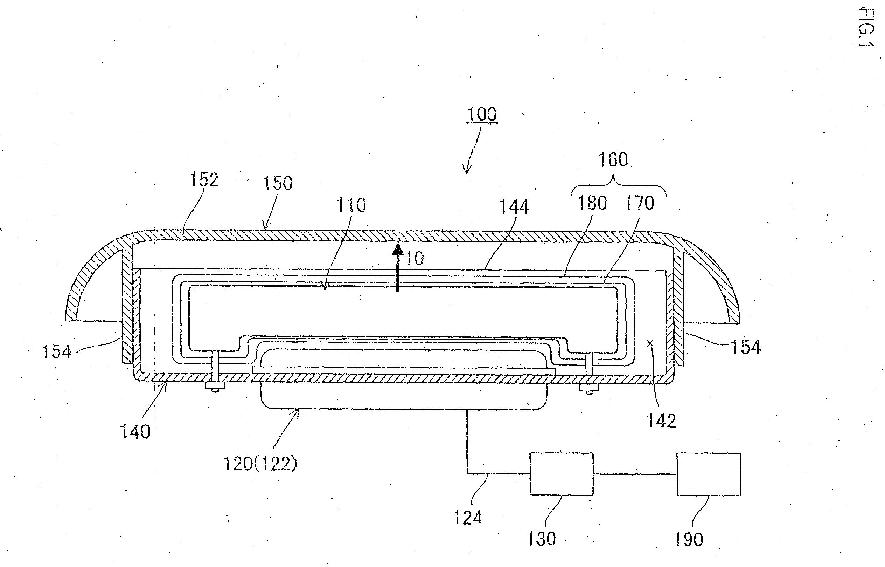

A mode for carrying out the invention will be explained in detail below with reference to the drawings.
Fig. 1 shows a sectional structure of an airbag system 100 according to one embodiment of an 'airbag system' of the invention;
Fig. 2 is a perspective view showing a state in which an airbag 110 in a folded state of the embodiment is sealed in a predetermined storage shape obtained by compressing and compacting it from the outside by means of a first covering member 170;
Fig. 3 is a perspective view showing a state in which the first covering member 170 shown in Fig. 2 is wrapped further by a second covering member 180; and
Fig. 4 is a diagrammatic view illustrating a relationship among a compression force, a compression reaction force and a shape retaining force in forming the airbag 110 in the folded state of the present embodiment into a predetermined storage shape by compressing and compacting it from the outside.
At first, a structure of an airbag system 100 of the present mode will be explained with reference to Fig. 1. The airbag system 100 is an airbag system that is mounted so as to be arranged for an occupant (referred to as a 'vehicle occupant' hereinafter) who sits on a driver's seat of a passenger car referred to as a 'vehicle' in the invention and not specifically shown, and is assembled into a steering wheel for steering the vehicle. It should be noted that the vehicle has an engine driving system constructed as a system related to operations of an engine and the vehicle, an electrical system constructed as a system related to electrical parts for use in the vehicle and an electronic control unit (ECU) for controlling operations of those engine driving and electrical systems not shown.

Fig. 1 shows a sectional structure of the airbag system 100 according to one embodiment of an 'airbag system' of the invention. The airbag system 100 has, as its basic components, at least an airbag 110, an inflator 120, a control unit 130, a retainer 140, an airbag cover 150 and an airbag holder 160.

The airbag 110 is a bladder-like bag that unfolds and inflates in a predetermined unfolding and inflating area to constrain the vehicle occupant when a vehicular accident occurs and is formed by sewing a piece or a plurality of pieces of fabric made of synthetic fiber (also called 'airbag ground fabric') in the shape of bladder. The airbag 110 is stored in the retainer 140 in a folded state in which the airbag is folded in a predetermined mode in advance. As the 'predetermined mode' mentioned here, there are typically known a rolled folding mode of retracting the airbag 110 in a shape of a roll, a bellow folding mode of folding the airbag 110 in a shape of a bellow, a folding mode (mechanical folding) of pushing the expanded airbag 110 regularly or irregularly against a wall and a folding mode of combining those. The airbag 100 mentioned here corresponds to the 'airbag' of the invention.

The inflator 120 includes a gas generating section 122 that generates gas for unfolding and inflating the airbag within an internal space of the airbag 110 constructed in the shape of bladder. Although not specifically shown, the gas generating section 122 is connected to the control unit 130 via a harness 124 and actuates and generates the unfolding and inflating gas by receiving a control signal output from the control unit 130. The unfolding and inflating gas generated by the gas generating section 122 is supplied to the inside of the airbag 110 via a gas flowing route (not shown). The control unit 130 is constructed by using a known CPU (central processing unit), a ROM, a RAM, input/output devices, peripheral devices and the like (not shown). The control unit 130 is also connected to vehicular data detecting means 190 that is a component of the vehicle and outputs the control signal to the gas generating section 122 on the basis of data received from the vehicle information detecting means 190. Typically, a collision-detecting sensor for detecting an occurrence of collision of the vehicle on the basis of acceleration or the like acting on the vehicle is used as the vehicle information detecting means 190. Here, the inflator 120 corresponds to the 'gas supplying section' of the invention.

The retainer 140 is constructed as a case in a shape of a box having a bottom for storing the airbag 110 and the inflator 120 constructed as described above. Specifically, the inflator 120 is stored in a lower part of a storage space 142 of the retainer 140 and the airbag 110 whose shape is retained by the airbag holder 160 is stored above the inflator 120. While being stored within the storage space 142, the airbag 110 is fixed to a bottom of the retainer 140 by fixing members such as bolts and nuts. An airbag opening 144 that opens so as to allow the stored airbag 110 to unfold and inflate is formed at an upper part of the retainer 140 and when a vehicular accident occurs, the airbag 110 projects out in a direction of an arrow 10 in Fig. 1 while unfolding and inflating through the airbag opening 144. This retainer 140 is constructed by using a molded article made of a metallic material or a plastic material. The retainer 140 here corresponds to the 'airbag storage section' of the invention and the airbag opening 144 of the retainer 140 corresponds to the 'airbag opening' of the invention.

The airbag cover 154 is arranged as a member for covering the airbag opening 144 that opens at the upper part of the retainer 140 in a storage state in which the airbag 110 is stored in the retainer 140. Typically, the airbag cover 150 is made of a plastic resin material. The airbag cover 150 covers the airbag 110 on the side of the vehicle occupant. Specifically, the airbag cover 150 has a plane plate portion 152 that extends horizontally along a plane opening face of the airbag opening 144 and an erecting portion 154 that vertically erects along a wall part of the retainer 140 from a back face of the plane plate section 152 and is fixed to the retainer 140. The airbag cover 150 is also provided with thin parts, i.e., so-called tear lines (tear lines 172 described later), where thickness of the plain plate portion 152 or the erecting portion 154 is relatively reduced. When a vehicular accident such as a collision occurs, the airbag cover 150 tears at the tear lines due to a load applied when the airbag 110 unfolds and inflates, puts the airbag opening 144 into an open state and allows the airbag 110 to project out to the outside of the retainer 140 through the airbag opening 144. This airbag cover 150 corresponds to the 'airbag cover' of the invention.

The airbag holder 160 comprises first and second covering members 170 and 180. The first covering member 170 is a bladder-like member that covers (wraps) the whole outer surface of the airbag 110 folded in the predetermined mode and the second covering member 180 is a bladder-like member that covers (wraps) the whole outer surface of the first covering member 170 that covers the folded airbag 110 over the first covering member 170. Thus, the airbag holder 160 of the present embodiment has a double cover structure of covering the airbag 110 in the folded state by the first covering member 170 and the second covering member 180. This airbag holder 160 corresponds to the 'airbag holder' of the present invention.

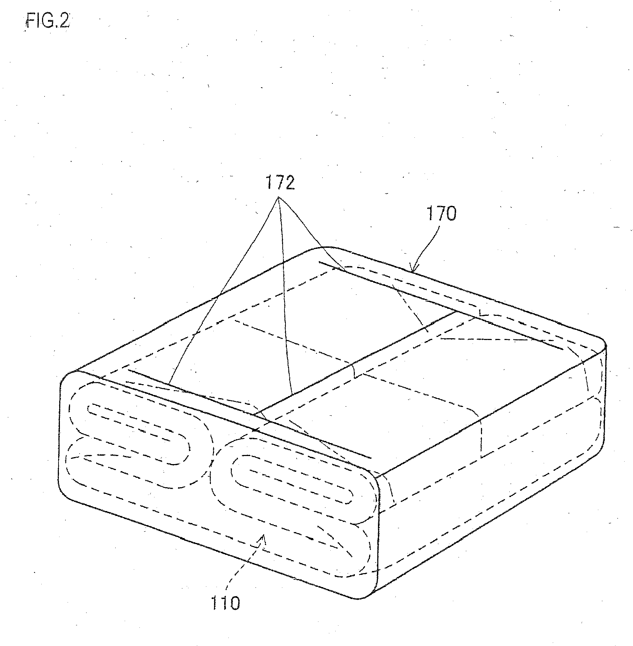

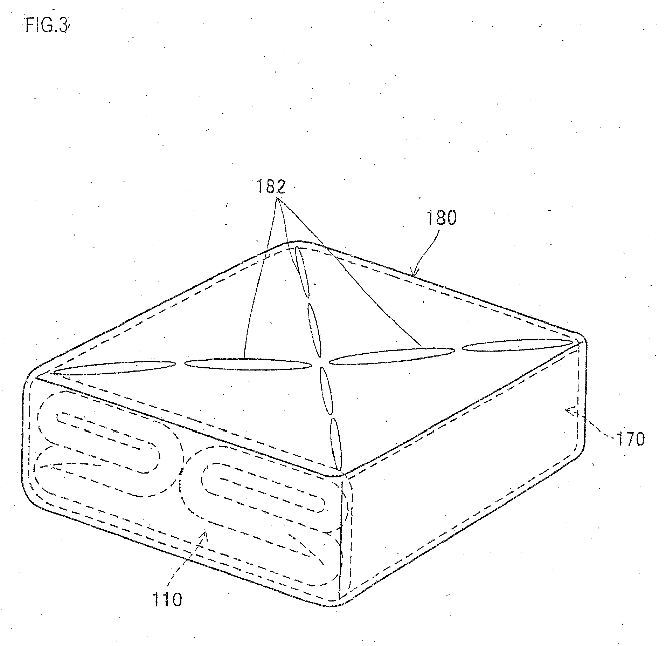

Here, a concrete structure of the first and second covering members 170 and 180 will be explained with reference to Figs. 2 and 3. Fig. 2 is a perspective view showing the state in which the airbag 110 in the folded state of the embodiment is sealed in the predetermined storage shape obtained by being compressed and compacted from the outside by the first covering member 170 and Fig. 3 is a perspective view showing the state in which the first covering member 170 shown in Fig. 2 is wrapped further by the second covering member 180. In order to obtain the airbag 110 covered by the airbag holder 160, the state as shown in Fig. 2 is formed by the first covering member 170 first in a first step and then the state as shown in Fig. 3 is formed by the second covering member 180 in a second step.

As shown in Fig. 2, the first step is a step of sealing the airbag 110 folded in the predetermined mode in the state of the predetermined storage shape obtained by compressing and compacting it from the outside by the first covering member 170 and of retaining the airbag 110 in the predetermined storage shape. As shown in Fig. 3, the second step is a step of wrapping the airbag 110 and first covering member 170 obtained in the first step with the second covering member 180. The first step here corresponds to the 'first step' of the present invention and the second step here corresponds to the 'second step' of the present invention. The airbag package obtained in the second step is then stored and fixed in the retainer 140 for example in a next step. It should be noted that the process of compressing and compacting the airbag 110 in the folded state may be carried out after folding the airbag 110 or may be carried out concurrently while folding the airbag 110.

The first covering member 170 shown in Fig. 2 is made as a film sheet member (thin sheet-like film) in the shape of a bladder made of resin. Such typical resin materials as CPA resin or PA (polyamide) resin, PE (polyethylene) resin and PET (polyethylene terephthalate) resin may be used for this film sheet member. This first covering member 170 corresponds to the 'film sheet member' of the present invention. One or a plurality of film sheet pieces composed of one or a plurality of resin layers may be used for the film sheet member. The first covering member 170 has a function of compressing and compacting the airbag 110 from the outside and of sealing it in the predetermined storage shape after wrapping the whole outer surface of the airbag 110 in the folded state. In other words, the first covering member 170 has both the functions of compressing and compacting the airbag 110 from the outside and of sealing this compacted airbag 110. It then forms a package state (also called as a 'sealed state', a 'closed state' or a 'packed state') in which the airbag 110 is sealed and packed while being compressed and compacted and steadily retains (maintains) the folded shape of the airbag 110. As for this compression, it is possible to adopt a method of compacting the airbag 110 by vacuuming or reducing the pressure of the inside of the first covering member 170 while storing the airbag 110 in the bladder-like first covering member 170 or a method of pressurizing the first covering member 170 itself from the outside. For instance, the pressure within the first covering member 170 may be set at in a range of 0.7 to 1 (bar).

The first covering member is also provided with regions where thin parts (also called as 'weak parts' or 'thickness-reduced parts') are formed in the sectional direction in a shape of a continuous line or dashed line, i.e., so-called tear lines 172, on the upper face thereof. In an example shown in Fig. 2, the tear line 172 is formed approximately in a shape of H. The tear line 172 may be formed by appropriately adopting a method of weakening the film by applying laser processing to the film sheet member, a method of weakening the film by heating by means of an iron or the like, a method of partly thinning the film sheet member or a method of applying such processing as perforating, slitting and embossing on the film sheet member. The first covering member 170 having the tear line 172 tears at the tear line 172 when the airbag 110 unfolds and inflates when a vehicular accident occurs because the unfolding and inflating force of the airbag acts on the inner peripheral surface of the first covering member 170. Thereby, the retention of the folded shape of the airbag 110 is removed, allowing the airbag 110 to inflate and project toward the airbag cover 150. The tear line 172 suppresses the first covering member 170 from tearing at unspecific places and from giving an adverse effect on the unfolding performance of the airbag 110. Thus, it is effective for achieving the adequate unfolding performance of the airbag 110.

As for the material of the first covering member 170 of the present embodiment, it is preferable to form the first covering member 170 as a translucent film sheet member. Thereby, it becomes possible to visibly recognize the folding state of the airbag 110 in and after covering the first covering member 170 through the translucent film sheet member and to stabilize a quality of retaining the airbag 110. As the translucent film sheet member, a transparent film sheet member and a semi-transparent film sheet member (opaque and colored) may be appropriately used.

Meanwhile, the second covering member 180 shown in Fig. 3 is made as a cloth made of synthetic resin fabric. The second covering member 180 becomes a member (also called as a 'hold cloth') having a function of holding the airbag 110 from the outside by wrapping the whole outer surface of the first covering member 170 that seals the airbag 110. The second covering member 180 corresponds to the 'wrapping member' in the present invention.

The second covering member 180 is provided with cut-open sections 182 where the upper face of the cloth is partially cut-open on the upper face thereof. The second covering member 180 having the cut-open section 182 ruptures at the cut-open sections 182 after the airbag 110 unfolds and inflates due to a vehicular accident and when the first covering member 170 tears at the tear line 172, allowing the airbag 110 to unfold, inflate and project out. Then the airbag 110 breaks the airbag cover 150 at the tear line by means of its load when it unfolds, inflates and projects out of the retainer 140 through the airbag opening 144. Thus the airbag 110 unfolded and inflated in the predetermined occupant constraining area constrains the vehicle occupant.

It is preferable to make the material of the second covering member 180 of the present embodiment as that of the fabric of the airbag 110. Thereby, it becomes possible to commonly use the material for the components of the airbag system 100 and to cut the manufacturing costs. It should be noted that in the invention, it is possible to adopt an arrangement of forming the second covering member 180 of a film sheet member similar to the first covering member 170, instead of forming it of the synthetic resin fabric.

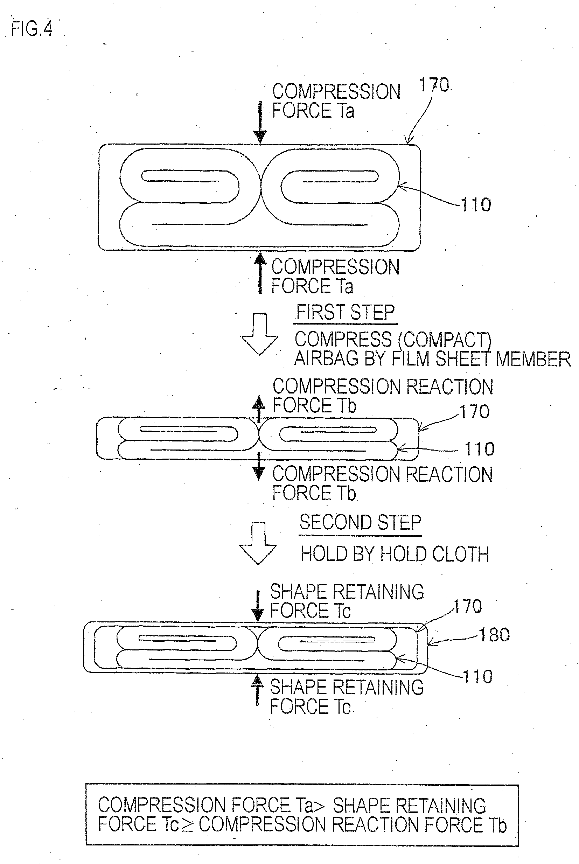

The inventors have repeatedly measured the load in compressing and compacting the airbag 110 in the folded state to be formed into the predetermined storage shape. As a result, it was confirmed that a compression force (compacting load) necessary for compressing the airbag 110 in the folded state to the predetermined storage shape (compact state) shown in Fig. 2 is considerably larger than compression reaction force (restoring force) generated when the airbag 110 which has been once compressed tries to return to the state before the compression. Then, the invention specifies a shape retaining force of the second covering member 180 to be lower than the compacting load and to be larger than the compression reaction force. This will be explained concretely by using Fig. 4.

Fig. 4 diagrammatically illustrates a relationship among the compression force, the compression reaction force and the shape retaining force in forming the airbag in the folded state of the present embodiment into the predetermined storage shape by compressing and compacting from the outside.

As shown in Fig. 4, the relationship between the compression force (compacting load) Ta(N) necessary for compressing the airbag 110 in the folded state through the first covering member 170 (film sheet member) in the first step and the compression reaction force (restoring force) Tb(N) that is the load of the airbag 110 trying to return to the state before the compression after the first step is set to be Compression Force Ta > Compression Reaction Force Tb. Accordingly, it is preferable to retain the shape of the first covering member 170 by means of the shape retaining force Tc that exceeds or is equal to the compression reaction force and is considerably lower than the compression force Ta in a case when the seal of the airbag 110 by the film sheet member is supposedly removed. Thereby, the second covering member 180 can steadily block the capacity of the airbag from increasing due to the compression reaction force of the airbag 110. In other words, as for the relationship among the compression force Ta, the compression reaction force T and the retaining force Tc, it is preferable to be Compression Force Ta > Retaining Force Tc ≥ Compression Reaction Force Tb.

The compression force Ta here corresponds to the 'compacting load required for compressing and compacting the airbag folded in the predetermined mode from the outside to be formed into the predetermined storage shape' of the invention and the compression reaction force Tb corresponds to the compression reaction force caused by the restoration of the airbag and generated when the seal of the airbag by the film sheet member is removed' in the invention. The shape retaining force Tc corresponds to the 'shape retaining force' of the invention.

Thus, the present embodiment is rational because the use of the first covering member 170 (film sheet member) as the member for compressing and sealing the airbag 110 in the folded state into the storage shape in advance allows the retaining force required for the second covering member 180 to be suppressed.

As described above, according to the airbag system 100 of the present embodiment, it becomes possible to compact the airbag 110 folded in the predetermined mode by using the film sheet member as the first covering member 170 for sealing the airbag 110 in the compressed state. Specifically, it becomes possible to apply the high compressing force to the airbag 110 in the folded state and to increase the degree of compaction by using the film sheet member. Furthermore, it becomes possible to suppress deterioration of the airbag 110 by sealing the airbag 110 in the folded state with the film sheet member. Furthermore, it becomes possible to downsize the airbag system 100 by the simple method because the airbag 110 whose capacity is relatively large among the components of the airbag system 100 is compacted by the film sheet member.

Furthermore, according to the structure and method of manufacturing the airbag system 100 of the present embodiment, it is possible to suppress the capacity of the airbag 110 in the compact state from increasing even when the seal of the airbag 110 by the film sheet member is removed by using the second covering member 180 (hold cloth) that wraps the film sheet member, in addition to the film sheet member, and to increase reliability for maintaining the compact state of the airbag 110 for a long period of time as compared with a case of sealing the airbag only with the film sheet member. Accordingly, it becomes possible to stabilize the quality of retaining the folded state of the airbag 110 for a long period of time. Specifically, it is possible to block the capacity of the airbag 110 from increasing with the increase in the compression reaction force Tb of the airbag 110 by the second covering member 180 even when the seal of the airbag 110 by the film sheet member is removed by setting the shape retaining force Tc of the second covering member 180 so as to be larger than the compression reaction force Tb based on the compression reaction force Tb of the airbag 110 trying to return to the state before the compression. Thereby, it becomes possible to prevent a phenomenon that the airbag cover 150 floats up above the retainer 140 due to the load received from the airbag 110.

### (Other Embodiment)

It should be noted that the invention is not limited to the embodiment described above and may be applied or modified variously. For instance, the following embodiment may be obtained by applying the embodiment described above.

Although the airbag holder 160 comprising the first and second covering members 170 and 180 has been used to retain the shape of the airbag 110 in the folded state in the embodiment described above, it is possible to use a further covering member in addition to the first and second covering members 170 and 180.

Furthermore, although the airbag system to be mounted so as to be arranged for a vehicle occupant who sits on the driver's seat of the vehicle has been described in the embodiment described above, the invention may be applied to a vehicle occupant who sits on a seat other than the driver's seat, e.g., a vehicle occupant who sits on a passenger seat or on a rear seat or further to a structure of an airbag system mounted so as to be arranged for a pedestrian who is not in the vehicle. The airbag system that constrains a pedestrian may be mounted typically on a vehicle hood section, a cowl section, a pillar section and the like.

Still furthermore, although the airbag system mounted in the vehicle has been described in the embodiment described above, the invention may be applied to a structure of an airbag system mounted to a vehicle other than passenger cars, e.g., trucks, buses, trains, ships, motorcycles and the like.

## Claims

1. An airbag system to be mounted in a vehicle, comprising:
an airbag formed into a predetermined storage shape so as to unfold and inflate when a vehicular accident occurs;
an airbag holder for retaining said airbag in said predetermined storage shape;
an airbag storage section for storing said airbag whose shape is retained by said airbag holder and having an airbag opening that allows said airbag to unfold and inflate;
an airbag cover for covering said airbag opening; and
a gas supplying section for supplying airbag-inflating gas to said airbag to unfold and inflate said airbag in an unfolding and inflating area when a vehicular accident occurs:
wherein
said airbag holder comprises a film sheet member that seals said airbag in a state formed into said predetermined storage shape obtained by compressing and compacting said airbag folded in a predetermined mode from the outside; and a wrapping member for wrapping said airbag and film sheet member.

2. The airbag system according to Claim 1, wherein said wrapping member is arranged so as to wrap said airbag and film sheet member by means of a shape retaining force that is lower than a compacting load required for forming into said predetermined storage shape by compressing and compacting said airbag folded in the predetermined mode and larger than a compression reaction force caused by restoration of said airbag and generated when the seal of said airbag by said film sheet member is removed.

3. The airbag system according to Claim 1 or 2, wherein said wrapping member is made of the same material as a fabric forming said airbag.

4. A vehicle, comprising:
an engine driving system;
an electrical system;
a drive control unit for controlling operations of said engine driving system and said electrical system; and
an airbag system mounted so as to be arranged for a vehicle occupant and to unfold and inflate an airbag in an unfolding and inflating area to constrain said vehicle occupant when a vehicular accident occurs: wherein
said airbag system is constructed as the airbag system as set forth in any one of Claims 1 through 3.

5. A method of manufacturing the airbag system that unfolds and inflates an airbag in an unfolding and inflating area to constrain a vehicle occupant when a vehicular accident occurs, comprising:
a first step of sealing said airbag folded in a predetermined mode by a film sheet member while compressing and compacting from the outside to form into a predetermined storage shape and, thereby, retaining said airbag in said predetermined storage shape; and
a second step of wrapping said airbag and film sheet member obtained in said first step by means of a wrapping member.

6. The method of manufacturing an airbag system according to Claim 5, wherein said airbag and film sheet member are wrapped with said wrapping member in said second step by means of a shape retaining force that is lower than a compacting load required for forming into said predetermined storage shape by compressing and compacting said airbag folded in the predetermined mode and larger than a compression reaction force caused by restoration of said airbag and generated when the seal of said airbag by said film sheet member is removed.

7. The method of manufacturing the airbag system according to Claim 5 or 6, wherein the same material as a fabric forming said airbag is used for said wrapping member.
